# EUROPEAN PATENT APPLICATION

(11) **EP 4 412 310 A1**
(43) Date of publication of application: **07.08.2024**
(21) Application number: 22891515.3
(22) Date of filing: 26.07.2022
(51) Int. Cl.: H04W 40/02

(54) **SYSTEM AND METHOD FOR PROCESSING MESSAGE, AND NETWORK APPARATUS**

(30) Priority: 10.11.2021 CN 202111329291
(71) Applicant: Huawei Technologies Co., Ltd., Shenzhen, Guangdong 518129 (CN)
(72) Inventor: CHE, Jia, Shenzhen, Guangdong 518129 (CN); HAN, Zhaojiao, Shenzhen, Guangdong 518129 (CN); SHAO, Pengfei, Shenzhen, Guangdong 518129 (CN); LU, Weijun, Shenzhen, Guangdong 518129 (CN)
(74) Representative: Maiwald GmbH
(86) International application number: PCT/CN2022/107851
(87) International publication number: WO 2023/082706

(57) **Abstract**

Embodiments of this application disclose a packet processing system and method, to perform network topology discovery and routing table delivery. In embodiments of this application, the system includes a source node, an intermediate node, and a destination node. After receiving, from a first port, a first packet to be sent by the source node to the destination node, the intermediate node decodes the first packet to obtain a forwarding path of the packet and an identifier ID of the source node; and the intermediate node generates a first mapping relationship based on the ID of the source node and an identifier of the first port, so that when receiving a response packet of the first packet, the intermediate node may determine a sending port of the response packet based on the first mapping relationship. This saves a time for decoding the response packet by the intermediate node, and improves packet processing efficiency.

## Description

This application claims priority to Chinese Patent Application No. 202111329291.5, filed with the China National Intellectual Property Administration on November 10, 2021 and entitled "PACKET PROCESSING SYSTEM AND METHOD, AND NETWORK APPARATUS", which is incorporated herein by reference in its entirety.

### TECHNICAL FIELD

Embodiments of this application relate to the Internet field, and in particular, to a packet processing system and method, and a network apparatus.

### BACKGROUND

To manage, operate, and maintain a network, a conventional network device and a corresponding network management system support a series of network management operations and control protocols, to perform network topology discovery, fault detection, route update, and the like.

InfiniBand (IB, InfiniBand) is a new high-speed network interconnection technology. Network initialization of an IB subnet needs to depend on a subnet manager (SM, subnet manager) for topology discovery and routing configuration of a network local identifier (LID, local identifier). The SM receives and sends a management packet (SMP, subnet management packet) with a subnet management agent (SMA, subnet management agent) on each node (Node) through a subnet management interface (SMI, subnet management interface), to implement a function of managing the IB network. In a network topology process, because a network device does not have a routing table corresponding to the LID, the SM and the SMA perform topology discovery for the subnet by receiving and sending a get (Get) packet and a feedback (GetResp) packet by using a direct port routing (direct port routing) packet, and information about each node is collected on the SM. The SM then generates a routing table based on the collected node information. The SM delivers the routing table to each node by using the direct port routing packet again. In this way, routing table configuration in a network initialization phase is completed, and each node may forward a packet by using a LID-based routing method based on the routing table.

A packet is forwarded by using a direct port routing method. In this method, each time the packet arrives at a node, the packet needs to be reported to a central processing unit (CPU, central processing unit) of the node device, and the CPU parses the packet to obtain a forwarding path of the packet, so as to complete a forwarding operation. In the direct port routing method, a packet needs to be sent to a CPU of a node device, and then the CPU parses the packet to obtain forwarding port information. A node close to the SM needs to process more packets. Therefore, as a network scale expands, this method for performing topology discovery by decoding a packet by using a CPU of a node to obtain a packet forwarding path has an increasingly obvious efficiency problem. How to improve packet forwarding efficiency during network topology discovery becomes an urgent problem that needs to be currently resolved.

### SUMMARY

Embodiments of this application provide a packet processing system and method. In a network topology discovery phase, after receiving, from a first port, a packet to be sent by a source node to a destination node, an intermediate node generates a mapping relationship between an identifier of the first port and an ID of the source node; the intermediate node decodes the packet to obtain a forwarding path of the packet, and forwards the packet based on the forwarding path; and when receiving a response packet of the packet, the intermediate node may directly forward the response packet to the source node from the first port based on the mapping relationship. This saves a time for decoding the response packet when the intermediate node forwards the response packet, and improves packet forwarding efficiency in a topology discovery process.

According to a first aspect of embodiments of this application, a packet processing system is provided, and includes a source node, an intermediate node, and a destination node. The source node is communicatively connected to the intermediate node, and is configured to: generate a first packet to be sent to the destination node, and send the first packet to the intermediate node. The first packet carries an identifier ID of the source node and a forwarding path of the first packet. The intermediate node is communicatively connected to the source node and the destination node, and is configured to receive the first packet from a first port of the intermediate node. The intermediate node decodes the first packet to obtain the forwarding path of the first packet. The intermediate node generates a first mapping relationship based on an identifier of the first port and the ID of the source node. The intermediate node receives a response packet of the first packet, and then may determine a sending port of the response packet of the first packet based on the first mapping relationship. The destination node is communicatively connected to the intermediate node, and is configured to: receive the first packet, generate the response packet of the first packet based on the received first packet, and send the response packet to the intermediate node.

In this embodiment of this application, the intermediate node receives the first packet from the first port, decodes the first packet to obtain the forwarding path of the first packet, and generates the first mapping relationship based on the first port and the ID of the source node, so that when receiving the response packet of the first packet, the intermediate node may determine the sending port of the response packet based on the first mapping relationship. This saves a time for decoding the response packet, and improves packet forwarding efficiency.

In a possible implementation of the first aspect, the forwarding path of the first packet includes a second mapping relationship, and the second mapping relationship indicates the intermediate node to forward the first packet from a second port. The intermediate node is further configured to send identifiers of at least two ports of the intermediate node to the source node by using the first port, where the identifiers of the at least two ports include the identifier of the first port and an identifier of the second port, and the second port is any one of all ports of the intermediate node other than the first port, so that the source node generates the second mapping relationship based on the identifier of the second port and the first packet. Before receiving the first packet, the intermediate node sends identifiers of all the ports of the intermediate node to the source node, so that the source node can generate, based on the identifiers of all the ports of the intermediate node, the first packet that carries the second mapping relationship. In this embodiment of this application, before receiving the first packet, the intermediate node sends the identifiers of all the ports of the intermediate node to the source node, so that the source node can generate the second mapping relationship between the first packet and the second port based on the second port other than the first port, and the second mapping relationship carried in the first packet is used as an egress port to be used by the intermediate node to forward the first packet. This improves implementability of the solution.

In a possible implementation of the first aspect, the response packet further includes identifiers of all ports of the destination node, and the identifiers of all the ports of the destination node are used by the source node to generate a routing table. The intermediate node is further configured to forward the first packet from the second port to a third port based on the second mapping relationship. The third port is a port of the destination node. The first packet is a packet for performing topology discovery on the destination node. The intermediate node forwards the first packet from the second port of the intermediate node to the third port of the destination node based on the second mapping relationship carried in the first packet. In this embodiment of this application, the intermediate node forwards the first packet to the third port based on the second mapping relationship, to obtain the response packet sent by the destination node, where the response packet carries the identifiers of all the ports of the destination node, so that the source node can generate the routing table based on the identifiers of all the ports of the destination node. This improves implementability of the solution.

In a possible implementation of the first aspect, the intermediate node is further configured to receive a second packet from the first port. The second packet carries the routing table. After the intermediate node forwards the response packet of the first packet, the source node may generate the routing table based on port information of the destination node carried in the response packet, and the intermediate node forwards the second packet that carries the routing table to the destination node. In this embodiment of this application, the routing table generated by the source node based on the response packet is forwarded. This improves implementability of the solution.

In a possible implementation of the first aspect, the first packet further carries a preset routing table of the destination node of the first packet. In this embodiment of this application, the first packet may alternatively be a packet for delivering the preset routing table. This provides more application scenarios for implementation of the solution, and improves implementability of the solution.

According to a second aspect of embodiments of this application, a packet processing method is provided, and includes: An intermediate node receives a first packet from a first port. The first packet carries an identifier ID of a source node and a forwarding path of the first packet. The intermediate node decodes the first packet to obtain the forwarding path of the first packet. The intermediate node generates a first mapping relationship based on an identifier of the first port and the ID of the source node of the first packet. The intermediate node receives a response packet of the first packet, and determines a sending port of the response packet of the first packet based on the first mapping relationship. In this embodiment of this application, the intermediate node receives the first packet from the first port, decodes the first packet to obtain the forwarding path of the first packet, and generates the first mapping relationship based on the first port and the ID of the source node, so that when receiving the response packet of the first packet, the intermediate node may determine the sending port of the response packet based on the first mapping relationship. This saves a time for decoding the response packet, and improves packet forwarding efficiency.

In a possible implementation of the second aspect, the first packet includes a second mapping relationship, and the second mapping relationship indicates the intermediate node to forward the first packet from a second port. Before the intermediate node receives the first packet from the first port, the method further includes: The intermediate node sends identifiers of at least two ports of the intermediate node to the source node by using the first port, where the identifiers of the at least two ports include the identifier of the first port and an identifier of the second port, and the second port is any one of all ports of the intermediate node other than the first port, so that the source node generates the second mapping relationship based on the identifier of the second port and the first packet. Before receiving the first packet, the intermediate node sends identifiers of all the ports of the intermediate node to the source node, so that the source node can generate, based on the identifiers of all the ports of the intermediate node, the first packet that carries the second mapping relationship. In this embodiment of this application, a method for obtaining a port of a node in topology discovery is provided. This improves implementability of the solution.

In a possible implementation of the second aspect, the response packet further includes identifiers of all ports of a destination node, and the identifiers of all the ports of the destination node are used by the source node to generate a routing table. Before the intermediate node receives the response packet of the first packet, the method further includes: The intermediate node forwards the first packet from the second port to a third port based on the second mapping relationship. The third port is a port of the destination node. The first packet is a packet for performing topology discovery on the destination node. The intermediate node forwards the first packet from the second port of the intermediate node to the third port of the destination node based on the second mapping relationship carried in the first packet. In this embodiment of this application, a solution of discovering the destination node by using the first packet is provided. This improves implementability of the solution.

In a possible implementation of the second aspect, the method further includes: The intermediate node receives a second packet from the first port. The second packet carries the routing table. After the intermediate node forwards the response packet of the first packet, the source node may generate the routing table based on port information of the destination node carried in the response packet, and the intermediate node forwards the second packet that carries the routing table to the destination node. In this embodiment of this application, the routing table generated by the source node based on the response packet is forwarded. This improves implementability of the solution.

In a possible implementation of the second aspect, the first packet further carries a preset routing table of a destination node of the first packet. In this embodiment of this application, the first packet may alternatively be a packet for delivering the preset routing table. This provides more application scenarios for implementation of the solution, and improves implementability of the solution.

According to a third aspect of embodiments of this application, a network apparatus is provided, and includes: a receiving unit, configured to receive a first packet from a first port, where the first packet carries an identifier ID of a source node and a forwarding path of the first packet; a decoding unit, configured to decode the first packet to obtain the forwarding path of the first packet; and a generation unit, configured to generate a first mapping relationship based on an identifier of the first port and the ID of the source node of the first packet, where the receiving unit is further configured to: receive a response packet of the first packet, and determine a sending port of the response packet of the first packet based on the first mapping relationship. An intermediate node has a function of performing behavior of the intermediate node in any one of the first aspect, the possible implementations of the first aspect, the second aspect, or the possible implementations of the second aspect. The function may be implemented by hardware, or may be implemented by hardware by executing corresponding software. The hardware or the software includes one or more modules corresponding to the function.

According to a fourth aspect of embodiments of this application, a network apparatus is provided. The network apparatus includes one or more processors. The one or more processors are coupled to a memory. The memory stores a program. When program instructions stored in the memory are executed by the one or more processors, the packet processing method described in any one of the second aspect or the possible implementations of the second aspect is implemented.

According to a fifth aspect of this application, a computer-readable storage medium is provided. The computer-readable storage medium stores instructions. When the instructions are run on a computer, the computer is enabled to perform the packet processing method in any one of the second aspect or the possible implementations of the second aspect.

### BRIEF DESCRIPTION OF DRAWINGS

FIG. 1 is a schematic diagram of a structure of a switch according to an embodiment of this application;
FIG. 2 is a schematic diagram of packet processing according to an embodiment of this application;
FIG. 3 is a schematic flowchart of a packet processing method according to an embodiment of this application;
FIG. 4 is another schematic flowchart of a packet processing method according to an embodiment of this application;
FIG. 5 is a schematic diagram of a structure of a packet processing system according to an embodiment of this application;
FIG. 6 is a schematic diagram of a structure of a source node according to an embodiment of this application;
FIG. 7 is a schematic diagram of a structure of an intermediate node according to an embodiment of this application;
FIG. 8 is a schematic diagram of a structure of a destination node according to an embodiment of this application;
FIG. 9 is another schematic diagram of a structure of a source node according to an embodiment of this application;
FIG. 10 is another schematic diagram of a structure of an intermediate node according to an embodiment of this application; and
FIG. 11 is another schematic diagram of a structure of a destination node according to an embodiment of this application.

### DESCRIPTION OF EMBODIMENTS

The following describes the technical solutions in embodiments of this application with reference to the accompanying drawings in embodiments of this application. It is clear that the described embodiments are merely some rather than all embodiments of this application. All other embodiments obtained by a person of ordinary skill in the art based on embodiments of this application without creative efforts shall fall within the protection scope of this application.

To facilitate understanding of the technical solutions of this application, a common switch and topology discovery method are first briefly described.

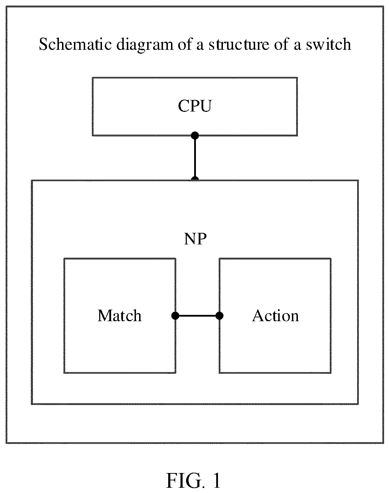

FIG. 1 is a schematic diagram of a structure of a switch according to an embodiment of this application. It may be learned from FIG. 1 that the switch includes a CPU and a network processing unit (NP, network processing unit), and the NP further includes a matcher (match) and an executor (action). A complex algorithm and software processing are usually performed in the CPU. When a network packet is forwarded, because the switch stores a routing table, a packet forwarding action needs to be quickly performed only by using matching and execution logic of the NP based on information about a network protocol packet header, and the packet is forwarded from a corresponding port. There are mainly two manners of forwarding a packet. In a first manner, a packet is sent to the CPU for decoding, a forwarding path of the packet is obtained from the packet, and then the packet is forwarded based on the forwarding path. Both a per-hop management protocol (PHMP, per-hop management protocol)-based forwarding manner and a direct port routing forwarding manner in embodiments of this application are such forwarding manners. In a second manner, the NP learns, based on packet header information of a packet by using the NP and the routing table stored in the switch and by searching the routing table, of a port from which the packet is to be forwarded, and the packet is directly forwarded. Both a LID-based forwarding manner and a direct access management protocol (DAMP, direct access management protocol)-based forwarding manner in embodiments of this application are such forwarding manners.

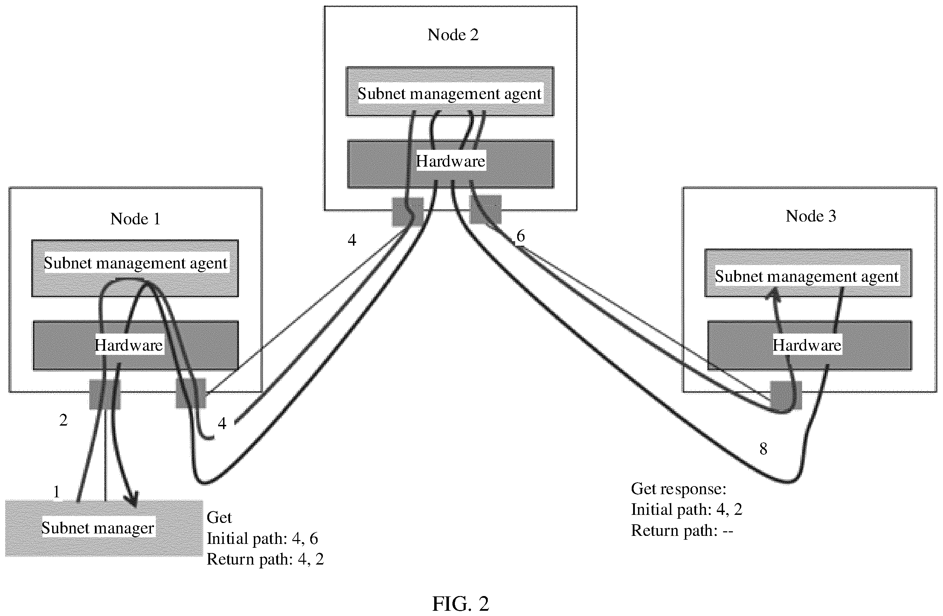

In actual application, the switch may form a network with another switch. Specifically, FIG. 2 is a schematic diagram of packet processing according to an embodiment of this application. An SM and an SMAin an IB subnet communicate with each other. In a topology discovery process, the SMA does not have a routing table for the subnet. Therefore, forwarding can be performed only by using direct port routing. As shown in the figure, an example in which a direct port routing packet is to be sent to a node 3 is used. An initial path (initial path) and a return path (return path) are defined in packet information of the direct port routing packet. It should be noted that manufacturers have respective names for a network management protocol of direct port routing, but essence of the network management protocol is that in a packet forwarding process, each intermediate node sends a packet to a CPU of the intermediate node through an internal loop, the CPU decodes the packet to obtain a forwarding path, and the packet is forwarded from an egress port indicated by the forwarding path.

An initial path (initial path) and a return path (return path) are defined in the direct port routing packet. The SM sends the direct port routing packet to the SMA. After receiving the direct port routing packet, the SMA sends a response packet of the direct port routing packet to the SM. As shown in FIG. 2, an example in which a direct port routing packet is to be sent to the node 3 is used. The SM generates the direct port routing packet, and sends the direct port routing packet to a node 1 by using a port 1. After receiving the direct port routing packet, the node 1 sends the direct port routing packet to a CPU of the node 1. An SMA deployed in the CPU of the node 1 processes the direct port routing packet, to learn of an initial path carried in the direct port routing packet. The node 1 forwards the direct port routing packet from a port 4 based on the initial path. The initial path herein is (4, 6). The initial path indicates that the node 1 is to forward the direct port routing packet from the port 4, and a node 2 is to forward the direct port routing packet from a port 6. The direct port routing packet further carries a return path. The return path herein is (4, 2). The return path indicates that when a response packet of the direct port routing packet is forwarded, the node 2 forwards the response packet of the direct port routing packet from a port 4, and the node 1 forwards the response packet of the direct port routing packet from a port 2.

After receiving the direct port routing packet, the node 2 sends the direct port routing packet to a CPU of the node 2. An SMA deployed in the CPU of the node 2 processes the direct port routing packet, to learn of the initial path carried in the direct port routing packet. The node 2 forwards the direct port routing packet from the port 6 based on the initial path. After receiving, from a port 8, the direct port routing packet forwarded by the node 1 and the node 2, the node 3 sends the direct port routing packet to a CPU of the node 3. An SMA deployed in the CPU of the node 3 processes the direct port routing packet, and generates the response packet of the direct port routing packet based on the direct port routing packet. When generating the response packet of the direct port routing packet, the node 3 uses the return path of the direct port routing packet as an initial path of the response packet of the packet. The response packet of the packet does not require a response packet, and therefore a return path of the response packet is null.

As a scale of the Internet continuously increases, if each node needs to send, through an internal bus when receiving a packet to be sent to the node, the packet to a CPU for processing, a waste of time is inevitably caused due to various reasons such as the internal bus, processing performance of the CPU, and scheduling of an operating system, and efficiency is low. To resolve a problem of low packet forwarding efficiency in a network topology phase, this application provides a solution that can effectively improve the packet forwarding efficiency in the network topology phase.

A technical solution similar to this application is described above. Based on the foregoing solution, in a network topology discovery phase, because there is no routing table on each network node, a packet can be sent only to a CPU, an SMA disposed in the CPU decodes the packet to extract a forwarding path carried in the packet, and then the packet is forwarded from a specified port based on the forwarding path. This application provides the following idea: When an SM sends, to a node 3, a direct port routing packet that needs to be forwarded by a node 1 and a node 2, an intermediate node records a first port that receives a first packet and an identifier (ID, identity document) of a source node of the first packet when receiving the first packet, and generates a mapping relationship between the first port and the identifier of the source node of the first packet as a temporary routing entry. The temporary routing entry indicates that when an ID of a destination node of a response packet passing through the node is the same as the ID of the source node of the first packet, the response packet is forwarded from the first port. The destination node of the response packet of the first packet is the source node of the first packet. Therefore, when the response packet of the first packet is forwarded to the intermediate node, an NP of the intermediate node may forward the response packet from the first port based on the mapping relationship indicated by the temporary routing entry. In this solution, when the response packet is forwarded, because there is the temporary routing entry, the NP may directly forward the response packet from the first port based on the mapping relationship that is between the ID of the destination node and the first port and that is indicated by the temporary routing entry. The response packet does not need to be sent to a CPU of the intermediate node. This saves a time for reporting the response packet to the CPU by the intermediate node and decoding the response packet by the CPU of the intermediate node, and improves packet forwarding efficiency in a network topology phase.

The following describes specific implementations of embodiments of this application with reference to the accompanying drawings.

This application has a plurality of application scenarios. The following separately describes the present invention in a topology discovery process and a routing table delivery process.
1. This application is applied to a case in a topology discovery process.

Before a routing network is established, topology discovery for the routing network is usually performed. In this process, a node in the routing network does not have a routing table. However, in the routing network, there are only two types of packet forwarding manners: a direct port routing forwarding method and a LID-based forwarding method. Therefore, a packet can be forwarded by an intermediate node only in a PHMP-based forwarding manner. In embodiments of this application, when a first packet is sent to a destination node of the first packet, a first port used by the intermediate node to receive the packet is bound to an ID of a source node of the first packet, to generate a first mapping relationship. In subsequent forwarding, when an ID of a destination node of a response packet is the same as an ID of the source node of the first packet, a DAMP-based forwarding manner may be used, and an NP directly forwards the packet from the first port based on the ID of the destination node of the packet in a packet header.

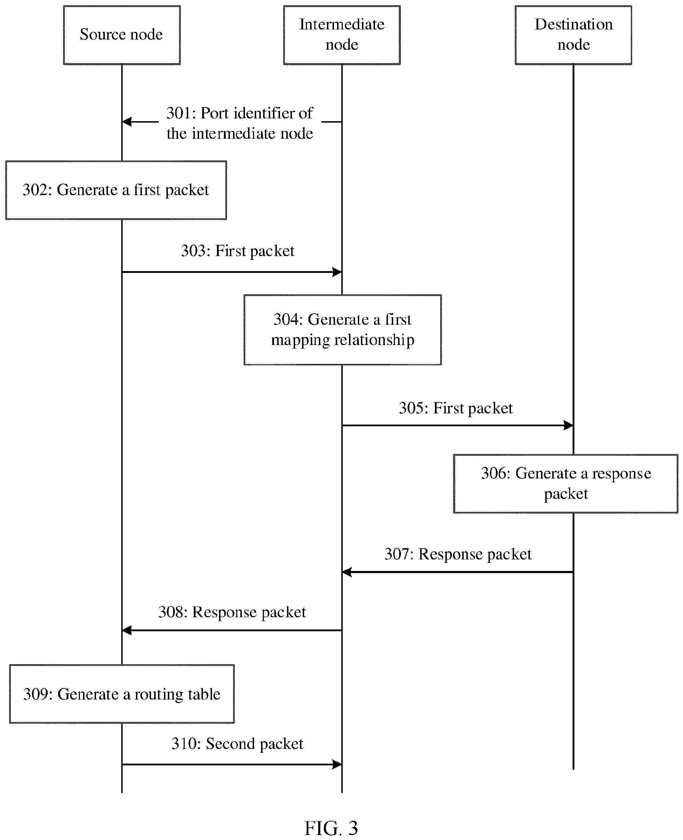

For a specific implementation and steps, refer to FIG. 3. FIG. 3 is a schematic flowchart of a packet processing method according to an embodiment of this application.

301: An intermediate node sends a port identifier of the intermediate node to a source node.

In a previous topology, the intermediate node is used as a destination node in the current topology. After the intermediate node receives a request packet that is sent by the source node and that is used for obtaining the port identifier of the intermediate node, the intermediate node sends the port identifier of the intermediate node to the source node. The intermediate node has two ports, and a first port is connected to the source node. The intermediate node includes the first port and a second port. A port identifier of the first port is 1, and a port identifier of the second port is 2.

302: The source node generates a first packet.

After receiving the port identifier of the intermediate node that is sent by the intermediate node, the source node learns, based on the port identifier of the intermediate node, that the intermediate node further has at least one port in addition to the first port. The source node generates the first packet based on the obtained port identifier of the intermediate node. The first packet is used to discover a topology process of a destination node on a premise that the intermediate node has been discovered. In a forwarding path carried in the first packet, the intermediate node forwards the first packet from the second port.

303: The source node sends the first packet to the intermediate node.

After the source node generates the first packet, the source node sends the first packet to the first port of the intermediate node. When the intermediate node receives the first packet from the first port, the intermediate node increases a value of a field of a quantity (TTL, time to live) of times that the first packet has been forwarded by 1, and the intermediate node determines, based on a field of a quantity (step) of times that the first packet needs to be forwarded and the TTL field, whether the packet arrives at the destination node. If a value of the field of the quantity of times that forwarding needs to be performed is equal to the value of the TTL field in this case, the packet arrives at the destination node, and does not need to be forwarded. It should be noted that an encapsulation format of the first packet described in this embodiment of this application is described by using a user-defined format as an example.

Optionally, the first packet may be encapsulated by using an encapsulation format of a direct port routing packet, or may be encapsulated by using a user-defined format. It should be noted that a packet header of the first packet includes at least the forwarding path of the first packet, the quantity of times that forwarding needs to be performed, and a protocol type.

This application provides a plurality of format definitions of the packet header of the first packet. Table 1 shows a format of a control protocol packet header provided in an embodiment of this application. The format needs to include an ID of the source node (source ID) used to determine a packet source, a protocol type (protocol) or a sub-protocol type (sub-protocol) used to determine a packet processing manner, a quantity (step) of hops that need to be passed through during forwarding and a TTL that are used to determine forwarding progress, and an egress port list (destPath) of the forwarding path used to determine the forwarding path. In addition, the packet header of the first packet may further include an ID of the destination node (destination ID) used to determine the destination node of the packet. However, because the ID of the destination node does not affect implementation of this embodiment of this application, the ID of the destination node is not limited in this embodiment of this application. The first packet in this embodiment of this application is described by using the format and content shown in Table 1. A source node of the first packet is the source node, and the ID of the source node is 100. The protocol type of the first packet is PHMP. The first packet is a packet for performing topology discovery, and therefore the sub-protocol type is a topology discovery protocol (get topo). The first packet is a topology discovery packet for discovering, by using the second port located on the intermediate node, the destination node connected to the intermediate node. Therefore, forwarding needs to be performed twice. An initial value of the quantity of hops that have been passed through during forwarding is 0. Therefore, the quantity of hops that need to be passed through during forwarding is 2, a TTL entry is 0, and an egress port list of the forwarding path is 2.

**Table 1 Format of a control protocol packet header provided in an embodiment of this application**

| Source ID (ID of the source node): 100 | |
|---|---|
| Protocol (protocol type, for example, direct port routing): PHMP | Sub-protocol (sub-protocol type, for example, a topology discovery protocol get topo): get topo |
| Step (quantity of hops that need to be passed through during forwarding): 2 | TTL (time to live, quantity of hops that have been passed through during forwarding): 0 |
| destPath (egress port list of the forwarding path): 2 | |

Optionally, in actual application, effect of the packet header shown in Table 1 may be achieved by using different means. For example, the ID of the destination node may be null in topology discovery, that is, the ID of the destination node does not necessarily exist in the packet header. An NP determines, by determining a protocol type field or a sub-protocol type field, whether to send the packet to a CPU of the node. Therefore, either of the protocol type and the sub-protocol type exists in the packet header. As for determining of the forwarding progress, a manner of combining the field of the quantity of times that forwarding needs to be performed and the TTL shown in Table 1 may be used, and whether forwarding still needs to be performed is determined by subtracting the quantity of hops that have been passed through during forwarding from the quantity of hops that need to be passed through during forwarding. Alternatively, only the quantity of hops that need to be passed through during forwarding may be set, the quantity is decreased by 1 each time forwarding is performed, and forwarding is performed until the quantity is 0. Determining of the forwarding path is not limited to the egress port list of the forwarding path, provided that a part that can indicate a forwarding egress port of each hop on the forwarding path is included. In actual application, provided that the function in the foregoing table can be implemented, this is not specifically limited herein.

304: The intermediate node generates a first mapping relationship.

After receiving, from the first port, the first packet sent by the source node, the intermediate node may learn, from the packet header of the first packet, that the intermediate node can perform routing with the source node by using at least the first port. The intermediate node generates a mapping relationship between the first port, namely, the port identifier 1, and an ID 100 of a destination node, namely, a mapping relationship between the first port and the ID of the source node, based on the first packet received from the first port and the sub-protocol type 100 in the header of the first packet. The first mapping relationship indicates to forward a packet with a destination node ID of 100 from the first port.

Optionally, when the packet header of the first packet further carries an ID 200 of a destination node, the intermediate node may generate a second mapping relationship based on the ID 200 of the destination node and the second port identifier 2. Therefore, when receiving a third packet, the intermediate node may forward the third packet from the second port based on the second mapping relationship. A field that is in a packet header of the third packet and that identifies the destination node is 200, and a protocol type field of the third packet is DAMP. In this way, the NP of the intermediate node may determine, based on the protocol type field of the third packet, that the packet does not need to be reported, and determine, based on an ID field of the destination node in the packet header of the third packet, that the third packet needs to be forwarded from the second port based on the second mapping relationship.

305: The intermediate node sends the first packet to the destination node.

After the intermediate node receives the first packet, the NP of the intermediate node decodes the packet header of the packet, determines, by using the protocol type field of the first packet, that the first packet is a packet that needs to be sent to the CPU, and sends the first packet to the CPU of the intermediate node for processing. The CPU of the intermediate node decodes the first packet, learns, from the quantity of hops that need to be passed through during forwarding and the TTL of the first packet, that the first packet needs to be forwarded once and has not been forwarded yet, and learns, from the egress port list field of the forwarding path of the first packet, that the first packet needs to be forwarded from the second port. After increasing the value of the TTL field of the first packet by 1, the CPU of the intermediate node forwards the first packet from the intermediate node of the first packet to the destination node from the second port.

306: The destination node generates a response packet.

After the destination node receives, from a third port, the first packet forwarded by the intermediate node, an NP of the destination node still determines, based on the protocol type field of the first packet, that the first packet is a packet that needs to be sent to a CPU. The NP of the destination node sends the first packet to the CPU of the destination node for processing. The CPU of the destination node decodes the first packet, learns, from the quantity of hops that need to be passed through during forwarding and the TTL of the first packet, that the first packet needs to be forwarded once and currently has been forwarded once, further processes specific content of the first packet, and learns that the first packet is a packet for performing topology discovery on the destination node. The CPU of the destination node generates the response packet based on the sub-protocol type of the first packet and the content of the first packet. The response packet carries identifiers of all ports of the destination node.

It should be noted that the response packet may be encapsulated in a standard format of a DAMP packet, or may be encapsulated in another format of a control protocol packet header in Table 2 provided in an embodiment of this application. In this embodiment of this application, a form in Table 2 is used for description. In actual application, a specific packet header format is not limited.

An ID of a destination node of the response packet is the ID, namely, 100, of the source node, and a protocol type of the response packet is DAMP. The format needs to include the ID of the destination node used to determine a packet destination and a protocol type or a sub-protocol type used to determine a packet processing manner. In addition, a packet header of the response packet may further include a sub-protocol type used to determine a source node of the packet. However, because the sub-protocol type does not affect implementation of this embodiment of this application, the sub-protocol type is not limited in this embodiment of this application.

**Table 2 Another format of a control protocol packet header provided in an embodiment of this application**

| Destination ID (ID of the destination node): 100 | |
|---|---|
| Protocol (protocol type, for example, direct port routing): DAMP | Sub-protocol (sub-protocol type, for example, a topology discovery protocol get topo): get topo |

307: The destination node sends the response packet to the intermediate node.

The destination node sends the response packet to the intermediate node from the third port. After the second port of the intermediate node receives the response packet sent by the destination node, the NP determines, based on a protocol type field in the packet header of the response packet, that the response packet is to be forwarded by using a DAMP-based forwarding method. The intermediate node searches for content 100 of an ID field of the destination node, and may find that the intermediate node stores the first mapping relationship between 100 and the first port, and the intermediate node determines, based on the first mapping relationship, that the response packet is to be forwarded from the first port.

308: The intermediate node sends the response packet to the source node.

The intermediate node searches for the content 100 of the ID field of the destination node, and may find that the intermediate node stores the first mapping relationship between 100 and the first port. After the intermediate node determines, based on the first mapping relationship, that the response packet is to be forwarded from the first port, the intermediate node forwards the response packet from the first port based on the first mapping relationship.

309: The source node generates a routing table.

After determining, by performing topology discovery for a plurality of times, that topology discovery has been performed on each port of the intermediate node and the destination node in the routing network, the source node generates a routing table of each node in the routing network based on a response packet obtained through the topology discovery performed for a plurality of times.

310: The source node sends a second packet to the intermediate node.

After generating the routing table, the source node sends the second packet to the intermediate node. The second packet carries the routing table, and the routing table may be a routing table of any node in the network. When the routing table is a routing table of the intermediate node, the intermediate node stores the routing table, and sends a response packet to the source node.

Optionally, when the routing table is a routing table of the destination node, the intermediate node stores the first mapping relationship between the first port and the ID of the source node, and decodes the second packet to obtain a forwarding egress port path of the second packet, and the intermediate node forwards the routing table to the destination node based on the path.

It should be noted that the routing table is not specifically limited herein.

In this embodiment of this application, in a process in which the source node learns of information about the intermediate node and performs topology discovery on the destination node, when forwarding the first packet to be sent by the source node to the destination node, the intermediate node generates the first mapping relationship between the ID of the source node and the port identifier of the first port based on the ID of the source node of the first packet and the port identifier of the first port used by the intermediate node to receive the first packet. The destination node generates the response packet based on the first packet. A protocol type field of the response packet is a LID, that is, the response packet uses a LID-based forwarding method, so that in a process of forwarding the response packet, the intermediate node may directly forward the response packet from the first port based on the ID of the destination node in the packet header and the first mapping relationship stored in the intermediate node. This saves a time for reporting the response packet to the CPU of the intermediate node for processing, and improves packet forwarding efficiency.

2. This application is applied to a case in a routing table delivery process.

Before a routing network is established, a routing table is usually delivered. In this process, a node in the routing network does not have a routing table of the routing network. However, in the routing network, there are only two packet forwarding manners: a direct port routing forwarding method and a LID-based forwarding method. Therefore, a packet can be forwarded by an intermediate node only in the direct port routing forwarding manner. In embodiments of this application, when a first packet is sent to a destination node of the first packet, a first port used by the intermediate node to receive the packet is bound to an ID of a destination node of the first packet, to generate a first mapping relationship. In subsequent forwarding, when an ID of a destination node of a packet is the same as the ID of the destination node of the first packet, the LID-based forwarding method may be used, and an NP directly forwards the packet from the first port based on the ID of the destination node of the packet.

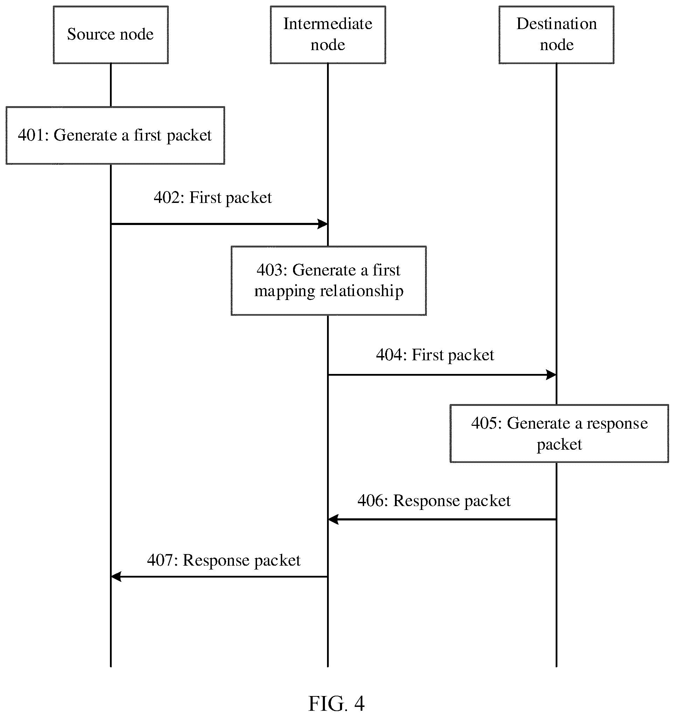

For a specific implementation and steps, refer to FIG. 4. FIG. 4 is another schematic flowchart of a packet processing method according to an embodiment of this application.

401: A source node generates a first packet.

After completing topology discovery for a routing network, the source node generates the first packet. The first packet includes a routing table of a destination node, a packet type of the first packet, an ID of the source node of the first packet, a forwarding path of the first packet, and the like. Packet header content of the first packet is similar to that in Table 1. Details are not described herein.

Optionally, the routing table may be preset by a user, or may be automatically generated by the source node after topology discovery. This is not specifically limited herein.

402: The source node sends the first packet to an intermediate node.

403: The intermediate node generates a first mapping relationship.

404: The intermediate node sends the first packet to the destination node.

Steps 402 to 404 in this embodiment are similar to steps 303 to 305 in the embodiment shown in FIG. 3. Details are not described herein.

405: The destination node generates a response packet.

After the destination node receives, from a third port, the first packet forwarded by the intermediate node, an NP determines, based on a protocol type field of the first packet, that the first packet is a packet that needs to be sent to a CPU. The NP sends the first packet to the CPU of the destination node for processing. The CPU of the destination node decodes the first packet, and learns, from a field of a quantity of hops that need to be passed through during forwarding and a TTL field of the first packet, that the first packet needs to be forwarded twice and currently has been forwarded twice, and the packet arrives at the destination node. The destination node stores the routing table carried in the first packet, and generates the response packet. The response packet is a response packet of the first packet, and a protocol type of the response packet is a LID-based forwarding method. The response packet may be encapsulated in a standard format of a LID packet, or may be encapsulated in a user-defined packet header format. For the user-defined packet header format herein, refer to Table 2. Details are not described herein.

406: The destination node sends the response packet to the intermediate node.

The destination node sends the response packet to the intermediate node from the third port. After a second port of the intermediate node receives the response packet sent by the destination node, an NP determines, based on a protocol type field in a packet header of the response packet, that the response packet is to be forwarded by using the LID-based forwarding method. The intermediate node searches for content 100 of an ID field of the destination node, and may find that the intermediate node stores the first mapping relationship between 100 and a first port, and the intermediate node determines, based on the first mapping relationship, that the response packet is to be forwarded from the first port.

407: The intermediate node sends the response packet to the source node.

The intermediate node searches for the content 100 of the ID field of the destination node, and may find that the intermediate node stores the first mapping relationship between 100 and the first port. After the intermediate node determines, based on the first mapping relationship, that the response packet is to be forwarded from the first port, the intermediate node forwards the response packet from the first port based on the first mapping relationship.

In this embodiment of this application, after collecting information about each node in the routing network, the source node generates a routing table. When the routing table is sent to the destination node through the intermediate node, the intermediate node generates the first mapping relationship based on the ID of the source node and an identifier of the port that receives the first packet. The destination node generates the response packet based on the first packet. A protocol type field of the response packet is a LID, that is, the response packet uses the LID-based forwarding method, so that in a process of forwarding the response packet, the intermediate node may directly forward the response packet from the first port based on an ID of the destination node in the packet header and the first mapping relationship stored in the intermediate node. This saves a time for reporting the response packet to a CPU of the intermediate node for processing, and improves packet forwarding efficiency.

The packet processing method in embodiments of this application is described above. The following describes a packet processing system, a source node, an intermediate node, and a destination node in embodiments of this application.

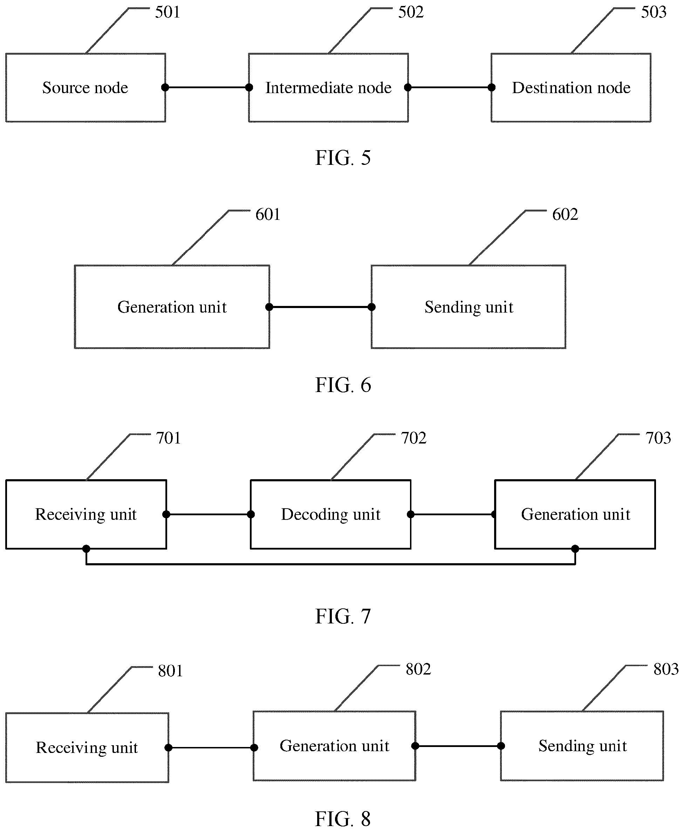

FIG. 5 is a schematic diagram of a structure of a packet processing system according to an embodiment of this application. The system includes a source node 501, an intermediate node 502, and a destination node 503. The source node 501 is communicatively connected to the intermediate node 502, and is configured to: generate a first packet to be sent to the destination node, and send the first packet to the intermediate node 502. The first packet carries an identifier ID of the source node 501 and a forwarding path of the first packet. The intermediate node 502 is communicatively connected to the source node 501 and the destination node, and is configured to receive the first packet from a first port of the intermediate node 502. The intermediate node 502 decodes the first packet to obtain the forwarding path of the first packet. The intermediate node 502 generates a first mapping relationship based on an identifier of the first port and the ID of the source node. The intermediate node 502 receives a response packet of the first packet, and then may determine a sending port of the response packet of the first packet based on the first mapping relationship. The destination node is communicatively connected to the intermediate node 502, and is configured to: receive the first packet, generate the response packet of the first packet based on the received first packet, and send the response packet to the intermediate node 502.

Functions and procedures performed by the source node in this embodiment of this application are similar to the functions and procedures performed by the source node in FIG. 3 and FIG. 4. Details are not described herein.

Functions and procedures performed by the intermediate node in this embodiment of this application are similar to the functions and procedures performed by the intermediate node in FIG. 3 and FIG. 4. Details are not described herein.

Functions and procedures performed by the destination node in this embodiment of this application are similar to the functions and procedures performed by the destination node in FIG. 3 and FIG. 4. Details are not described herein.

FIG. 6 is a schematic diagram of a structure of a source node according to an embodiment of this application. The source node includes:
a generation unit 601, configured to generate a first packet to be sent to a destination node; and
a sending unit 602, configured to send the first packet to an intermediate node, where the first packet carries an identifier ID of the source node and a forwarding path of the first packet.

Functions and procedures performed by the source node in this embodiment of this application are similar to the functions and procedures performed by the source node in FIG. 3 and FIG. 4. Details are not described herein.

FIG. 7 is a schematic diagram of a structure of an intermediate node according to an embodiment of this application. The intermediate node includes:
a receiving unit 701, configured to receive a first packet from a first port, where the first packet carries an identifier ID of a source node and a forwarding path of the first packet;
a decoding unit 702, configured to decode the first packet to obtain the forwarding path of the first packet; and
a generation unit 703, configured to generate a first mapping relationship based on an identifier of the first port and the ID of the source node of the first packet.

The receiving unit 701 is further configured to: receive a response packet of the first packet, and determine a sending port of the response packet of the first packet based on the first mapping relationship.

Functions and procedures performed by the intermediate node in this embodiment of this application are similar to the functions and procedures performed by the intermediate node in FIG. 3 and FIG. 4. Details are not described herein.

FIG. 8 is a schematic diagram of a structure of a destination node according to an embodiment of this application. The destination node includes:
a receiving unit 801, configured to receive a first packet;
a generation unit 802, configured to generate a response packet of the first packet based on the received first packet; and
a sending unit 803, configured to send the response packet to an intermediate node.

Functions and procedures performed by the destination node in this embodiment of this application are similar to the functions and procedures performed by the destination node in FIG. 3 and FIG. 4. Details are not described herein.

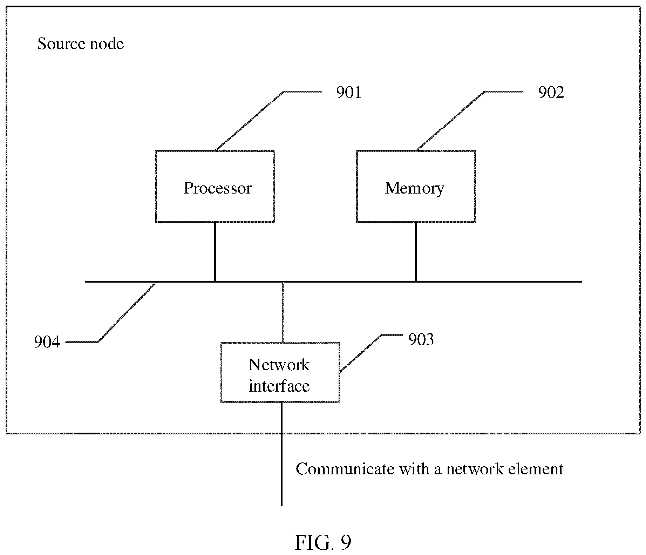

FIG. 9 is another schematic diagram of a structure of a source node according to an embodiment of this application. The source node includes a processor 901, a memory 902, a network interface 903, and a bus system 904.

The bus system 904 is configured to couple all hardware components of the source node together.

The network interface 903 is configured to implement a communication connection between the source node and at least one other network element, which may be implemented by using the Internet, a wide area network, a local network, a metropolitan area network, or the like.

The memory 902 is configured to store program instructions and data.

The processor 901 is configured to read the instructions and the data stored in the memory 902, to perform the functions and procedures performed by the source node in FIG. 3 and FIG. 4. Details are not described herein.

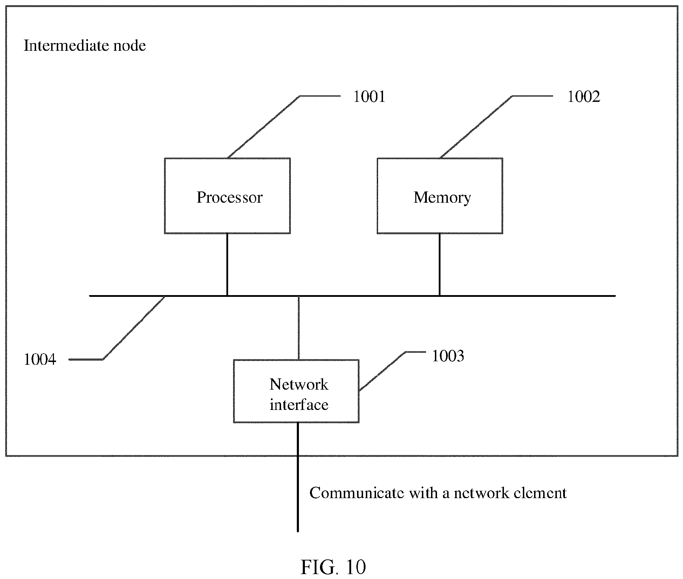

FIG. 10 is another schematic diagram of a structure of an intermediate node according to an embodiment of this application. The intermediate node includes a processor 1001, a memory 1002, a network interface 1003, and a bus system 1004.

The bus system 1004 is configured to couple all hardware components of the source node together.

The network interface 1003 is configured to implement a communication connection between the source node and at least one other network element, which may be implemented by using the Internet, a wide area network, a local network, a metropolitan area network, or the like.

The memory 1002 is configured to store program instructions and data.

The processor 1001 is configured to read the instructions and the data stored in the memory 1002, to perform the functions and procedures performed by the intermediate node in FIG. 3 and FIG. 4. Details are not described herein.

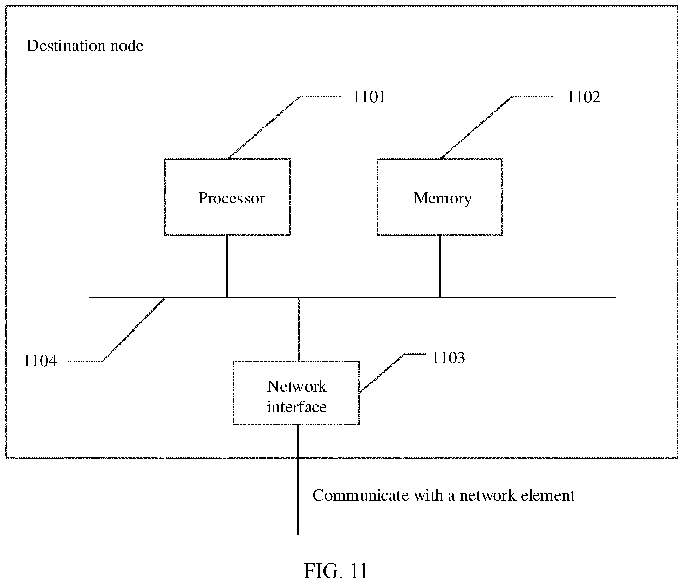

FIG. 11 is another schematic diagram of a structure of a destination node according to an embodiment of this application. The destination node includes a processor 1101, a memory 1102, a network interface 1103, and a bus system 1104.

The bus system 1104 is configured to couple all hardware components of the destination node together.

The network interface 1103 is configured to implement a communication connection between the source node and at least one other network element, which may be implemented by using the Internet, a wide area network, a local network, a metropolitan area network, or the like.

The memory 1102 is configured to store program instructions and data.

The processor 1101 is configured to read the instructions and the data stored in the memory 1102, to perform the functions and procedures performed by the destination node in FIG. 3 and FIG. 4. Details are not described herein.

An embodiment of this application further provides a computer storage medium. The computer storage medium is configured to store computer software instructions to be used by the foregoing source node, intermediate node, or destination node. The computer software instructions include a program designed for the source node, the intermediate node, or the destination node.

The source node may be the source node described in FIG. 3 and FIG. 4.

The intermediate node may be the intermediate node described in FIG. 3 and FIG. 4.

The destination node may be the destination node described in FIG. 3 and FIG. 4.

An embodiment of this application further provides a computer program product. The computer program product includes computer software instructions. The computer software instructions may be loaded by a processor to implement the procedure in the packet processing method in either of FIG. 3 and FIG. 4.

It may be clearly understood by a person skilled in the art that for convenient and brief description, for detailed working processes of the system, apparatus, and unit described above, refer to the corresponding processes in the foregoing method embodiments. Details are not described herein.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located at one position, or may be distributed on a plurality of network units. Some or all of the units may be selected based on actual requirements to achieve the objectives of the solutions in embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The storage medium includes any medium that can store program code, for example, a USB flash drive, a removable hard disk, a read-only memory (ROM, read-only memory), a random access memory (RAM, random access memory), a magnetic disk, or an optical disc.

## Claims

1. A packet processing system, comprising a source node, an intermediate node, and a destination node, wherein
the source node is communicatively connected to the intermediate node, and is configured to generate a first packet to be sent to the destination node, and is further configured to send the first packet to the intermediate node, wherein the first packet carries an identifier ID of the source node and a forwarding path of the first packet;
the intermediate node is communicatively connected to the source node and the destination node, and is configured to receive the first packet from a first port of the intermediate node; the intermediate node decodes the first packet to obtain the forwarding path of the first packet; the intermediate node generates a first mapping relationship based on an identifier of the first port and the ID of the source node; and the intermediate node receives a response packet of the first packet, and then determines a sending port of the response packet of the first packet based on the first mapping relationship; and
the destination node is communicatively connected to the intermediate node, and is configured to: receive the first packet, generate the response packet of the first packet based on the received first packet, and send the response packet to the intermediate node.

2. The system according to claim 1, wherein the forwarding path of the first packet comprises a second mapping relationship, and the second mapping relationship indicates the intermediate node to forward the first packet from a second port; and
the intermediate node is further configured to:
send identifiers of at least two ports of the intermediate node to the source node by using the first port, wherein the identifiers of the at least two ports comprise the identifier of the first port and an identifier of the second port, and the second port is any one of all ports of the intermediate node other than the first port, so that the source node generates the second mapping relationship based on the identifier of the second port and the first packet.

3. The system according to claim 2, wherein the response packet further comprises identifiers of all ports of the destination node, and the identifiers of all the ports of the destination node are used by the source node to generate a routing table; and
the intermediate node is further configured to:
forward the first packet from the second port to a third port based on the second mapping relationship, wherein the third port is a port of the destination node.

4. The system according to claim 3, wherein the intermediate node is further configured to receive a second packet from the first port, wherein the second packet carries the routing table.

5. The system according to claim 1, wherein the first packet further carries a preset routing table of the destination node of the first packet.

6. A packet processing method, comprising:
receiving, by an intermediate node, a first packet from a first port, wherein the first packet carries an identifier ID of a source node and a forwarding path of the first packet;
decoding, by the intermediate node, the first packet to obtain the forwarding path of the first packet;
generating, by the intermediate node, a first mapping relationship based on an identifier of the first port and the ID of the source node of the first packet; and
receiving, by the intermediate node, a response packet of the first packet, and determining a sending port of the response packet of the first packet based on the first mapping relationship.

7. The method according to claim 6, wherein the forwarding path of the first packet comprises a second mapping relationship, and the second mapping relationship indicates the intermediate node to forward the first packet from a second port; and
before the receiving, by an intermediate node, the first packet from a first port, the method further comprises:
sending, by the intermediate node, identifiers of at least two ports of the intermediate node to the source node by using the first port, wherein the identifiers of the at least two ports comprise the identifier of the first port and an identifier of the second port, and the second port is any one of all ports of the intermediate node other than the first port, so that the source node generates the second mapping relationship based on the identifier of the second port and the first packet.

8. The method according to claim 7, wherein the response packet further comprises identifiers of all ports of the destination node, and the identifiers of all the ports of the destination node are used by the source node to generate a routing table; and
before the receiving, by the intermediate node, a response packet of the first packet, the method further comprises:
forwarding, by the intermediate node, the first packet from the second port to a third port based on the second mapping relationship, wherein the third port is a port of the destination node.

9. The method according to claim 8, wherein the method further comprises:
receiving, by the intermediate node, a second packet from the first port, wherein the second packet carries the routing table.

10. The method according to claim 6, wherein the first packet further carries a preset routing table of a destination node of the first packet.

11. A network apparatus, comprising:
a receiving unit, configured to receive a first packet from a first port, wherein the first packet carries an identifier ID of a source node and a forwarding path of the first packet;
a decoding unit, configured to decode the first packet to obtain the forwarding path of the first packet; and
a generation unit, configured to generate a first mapping relationship based on an identifier of the first port and the ID of the source node of the first packet, wherein
the receiving unit is further configured to: receive a response packet of the first packet, and determine a sending port of the response packet of the first packet based on the first mapping relationship.

12. The network apparatus according to claim 11, wherein the first packet comprises a second mapping relationship, and the second mapping relationship indicates the intermediate node to forward the first packet from a second port; and
the intermediate node further comprises:
a sending unit, configured to send identifiers of at least two ports of the intermediate node to the source node by using the first port, wherein the identifiers of the at least two ports comprise the identifier of the first port and an identifier of the second port, and the second port is any one of all ports of the intermediate node other than the first port, so that the source node generates the second mapping relationship based on the identifier of the second port and the first packet.

13. The network apparatus according to claim 12, wherein the response packet further comprises identifiers of all ports of the destination node, and the identifiers of all the ports of the destination node are used by the source node to generate a routing table; and
the sending unit is further configured to forward the first packet from the second port to a third port based on the second mapping relationship, wherein the third port is a port of the destination node.

14. The network apparatus according to claim 13, wherein the receiving unit is further configured to receive a second packet from the first port, wherein the second packet carries the routing table.

15. The network apparatus according to claim 14, wherein the first packet further carries a preset routing table of a destination node of the first packet.

16. A network apparatus, comprising one or more processors, wherein the one or more processors are coupled to a memory, the memory stores a program, and when program instructions stored in the memory are executed by the one or more processors, the method according to any one of claims 6 to 10 is implemented.

17. A computer-readable storage medium, comprising instructions, wherein when the instructions are run on a computer, the computer is enabled to perform the method according to any one of claims 6 to 10.
